# EUROPEAN PATENT SPECIFICATION

(11) **EP 4 585 735 B1**
(45) Date of publication and mention of the grant of the patent: **04.11.2026**
(21) Application number: 24151102.1
(22) Date of filing: 10.01.2024
(51) Int. Cl.: D04H 1/4209, C04B 35/622, C04B 35/634, D01F 9/10, D04H 1/728, D04H 3/002, D04H 3/02, D04H 3/03

(54) **PROCESS TO MAKE FLEXIBLE NON-WOVEN CERAMIC MATS**
VERFAHREN ZUR HERSTELLUNG VON FLEXIBLEN KERAMISCHEN VLIESSTOFFMATTEN
PROCÉDÉ DE FABRICATION DE MATS CÉRAMIQUES NON TISSÉS FLEXIBLES

(43) Date of publication of application: 16.07.2025
(73) Proprietor: Eurekite Holding B.V., 7521 WC Enschede (NL)
(72) Inventor: ten Hove, Marcel, 7543GJ Enschede (NL); Stankeviciute-Braker, Ruta, 7531BR Enschede (NL); Cadafalch Gazquez, Gerard, 6227RC Maastricht (NL)
(74) Representative: Andrejewski - Honke Patent- und Rechtsanwälte Partnerschaft mbB

(56) References cited:
- WO-A1-2017/216367
- US-A1- 2014 332 733
- US-A1- 2023 023 362
- US-A1- 2023 043 218

## Description

The present invention describes a process to make flexible non-woven ceramic mats.

There are several different processes to make flexible non-woven ceramic mats known from the prior art. For example EP 2 384 375 B1 describes a process for forming a PTFE mat. The known process uses an apparatus comprising a charge source and a target at the distance from said charge source. Making fibres using the ceramic, a polymer and a solvent results in a dispersion which is electrostatically charged by contact with the said charge source. The electrically charged dispersion is collected as fibres on the target to form a mat precursor. Afterwards the mat precursor is heated to remove said solvent and polymer thereby forming the desired PTFE mat.

The PCT application WO 2015/160706 A1 discloses solution blown spun polymer fibres and polymer blends thereof. The polymer fibres are formed using a blow spinning process. The resulting biocompatible composition can for example be used as a wound dressing.

The prior publication WO 2017/216367 A1 of the applicant discloses a method to make flexible ceramic fibres and polymer composites.

US 2023/043218 A1 discloses polycrystalline, aluminium silicate ceramic filament non-woven mats. These aluminium silicate ceramic filaments have been produced using for example electrospinning. The filaments have an average diameter up to 1000 nanometers (nm) as determined with electron microscopy. The average crystalline content ranges from 15 wt % up to 80 wt %.

In the publication US 2023/023362 A1 polycrystalline, aluminium silicate ceramic filament non-woven mats are disclosed as well. The filaments have an average diameter of less than about 2 micrometers (pm) and include an average of about 15 wt % to about 80 wt % crystalline mullite.

The prior known state of the art results in ceramic fibre mats with reasonable features concerning flexibility and duration. However, there are still possibilities to improve and overcome drawbacks of the prior art, for example several prior known ceramic mats are critical in view of forces which tend to apply a pulling or tensile force on the said mat.

Therefore it is an object of the pending application to provide a process to make flexible non-woven ceramic mats resulting in products with higher durability and strength.

In order to solve this problem a process according to claim 1 is disclosed. Due to the claimed process of claim 1 and following the measures that the organic material in the final mat being less than 1 % per weight in the mat the invention provides a pulling or tensile strength which is higher than the state of the art previously disclosed. This is achieved with fibres of small diameter. Indeed the low residual organic material content in the final mat ensures that the mat is flexible and allows for bending radii close to 0 mm together with a surprising strength resistance. Indeed the pulling strength of the final mat is at least 2 N/cm measured for example according to DIN EN ISO 13934-1 comparable to textiles and their tensile properties.

Furthermore the missing organic material in the ceramic mat and its non-woven character ensures that the fibres are not fused to each other and the ceramic mat does not show fixed connection points between the fibres. Therefore the fibres can follow a corresponding bending force without damage.

This is further ensured due to the fact that the ceramic fibres have an average diameter between 0,2 µm and 5 µm, especially between 1 µm and 1.5 µm. This small average diameter together with the entanglement of the fibres between each other surprisingly leads to a pulling or tensile strength of at least 2 N/cm.The pulling or tensile strength refers to the resulting nonwoven material of certain planar density, not the fibre itself.

The pulling or tensile strength of the processed non-woven ceramic mats could in an alternative be measured according to ASTM which corresponds to the standard of the American Society for testing and materials. In detail a method comparable with the standard test method for tensile properties of paper and paperboard can be applied (ASTM D828-22). During this test method a test specimen of standardized sample cross-section is gripped and a uniaxial force is applied until failure. This force and the corresponding elongation leads to the mentioned pulling or tensile strength of at least 2 N/cm, preferably more than 10 N/cm and most preferably more than 20 N/cm which ensures a strong and durable character of the non-woven ceramic mats according to the invention.

Furthermore the said mat is provided with an apparent pore size between 1 and 25 µm or between 3 and 20 µm resulting in a character of the said mats which is favourable for example as a physical barrier. The pore size and the fibre diameter can be measured by SEM (scanning electron microscope) or other known techniques. I.e. the ceramic mats can be used as the said physical barrier to separate for example solids from fluxes even if the fluxes work at high temperatures. Furthermore the porous character reflects the entanglement of the fibres without residual polymeric binder which therefore cannot close the pores.

For example the non-woven ceramic mat according to the invention can be used as a filter medium to separate micro particles from liquids or even hot gases. Furthermore it is possible to realize separators for a battery or hydrolyzer technology.

A further possibility makes use of the catalyst character of the ceramic for example in combination with fixed and fluidized beds as a floating catalyst.

Other applications use the non-woven ceramic mats according to the invention to improve the dimensional stability as for example a skeleton. For example polymeric films show low deformation at high temperature because they are stabilized by the ceramic mat. Such films can be used as a substrate for electronics or membranes. **In** a comparable manner ceramic composites or solid electrolytes are possible.

**In** order to spin the solution resulting in the endless precursor of green fibres several methods known in the art can be referred to. For example it is possible to spin the solution via blow spinning, electro spinning or force spinning as is described in for example WO 2017/216367 A1 of the applicant.

**In** order to ensure the low organic content, the residual organic material in the final mat is measured by thermogravimetric analysis. This thermogravimetric analysis is a method of thermal analysis in which the mass of the sample is measured over time as the temperature changes. **In** detail, the temperature during the heat treatment of the precursor fibres is increased in an oven starting from room temperature at approximately 20 °C up to 100 °C or even more up to 900 °C. During this increasing temperature and at the same time the mass of the precursor fibres forming the non-woven ceramic mat is measured and decreases due to the loss of solvent and polymer.

As soon as the residual organic material in the final mat being less than 1 % per weight in the mat the heating procedure is terminated. In this connection a corresponding control unit is used to survey the weight reduction of the mat to be measured as well as to control the temperature and the gradients of temperature increase measured in °C temperature per minute. I. e., the thermogravimetric analysis and the control of the temperature and duration of the heat treatment are combined in order to come to the desired result of less than 1 % per weight of the organic material in the final mat. This is explained in more detail in the description of the figures.

The ceramic respective metal salt used to prepare the ceramic fibre precursor is a salt or organometal on the basis of a metal oxide. Organometal means a compound containing at least a metal atom bonded to an organic group or groups. Especially aluminium oxide is used. The general process works in that way that the metal salt is part of the metal oxide precursor and then finally results in the desired metal oxide. The consolidated ceramic fibres show a degree of crystallinity between 1 % and 90 %. This means that 1 % up to 90 % per weight of the consolidated ceramic fibres show a crystal character. The crystal size ranges from approximately 1 nm to 100 nm. The quantification of the crystalline phases is a fundamental stage in the determination of the structure, properties and applications of the desired ceramic material. Utilizing the x-ray diffraction technique XRD crystalline phases can be identified. Furthermore the so-called Rietvelt-method is a useful tool for an additional quantitative analysis of the phases and their overall content in the said fibres. In this connection reference is made to the article "Quantitative Determination of the Crystalline Phases of the Ceramic Materials Utilizing the Rietveld Method", C.T. Kniess and others in 7th International Latin Conference on Powder Technology, November 08-10, Atibaia, SP, Brazil.

The precursor solution to be used for the fibre production is prepared by mixing the metal salt and/or organometal respective organometallic compound with the solvent respective acid and the polymeric binder. As already described earlier aluminium oxide or aluminium acetate is the preferred metal oxide to be used. There are several solvents/acids which are preferred, for example toluene or hexane because of their volatile character at room temperature. Most preferred solvents are water, isopropanol, acetic acid, formic acid. As a preferred polymeric binder a polymer like polyethylene oxide (PEO) is used. Further preferred binders are polyvinylpyrrolidone (PVP) and polyvinylalcohol (PVA).

The solution comprises the solved metal precursor and the polymer to increase the viscosity of the solution. The solid content, i. e. the polymer and the precursor, must be above 5 % per weight in the precursor solution, i. e. the solvent plus salt of metal oxide plus polymer, in order to get a nice deposition. The kinematic viscosity of the aforementioned solution is normally kept between 0.01 and 10000 pascal seconds.

When spinning the solution resulting in the polymer/metal salt or polymer/organometallic precursor fibre or green fibre, the said green fibre is laid down on the porous substrate. The porosity of the substrate is less than the length of the laid down fibres. As the fibres result from endless precursor fibres with the length of at least several cm up to 100 m or more a substrate with pore sizes of less than 5 mm is sufficient. Preferably, a perforated plate with a diameter of the holes between 1 mm and 2 mm is used.

The planar density of the fibres in the mat is preferably between 5 and 60 g/m² and especially between 10 and 40 g/m², approximately 30 g/m² or even more. The planar density has a direct impact on the pulling or tensile strength. Indeed the pulling strength is linear scalable with planar density. I. e., the higher the planar density the higher is the pulling or tensile strength with a linear dependant character.

As mentioned before, the ceramic fibres have an average diameter between 0.2 µm and 5 µm. **In** this connection the fibre diameters of the ceramic fibres show a distribution with log normal character. This means the diameter varies with a continuous probability distribution of the fibre diameters which is log normally distributed.

Summarizing, a process is disclosed to make a flexible non-woven ceramic mat where the ceramic fibres show a small average diameter on the one hand, are stable due to their ceramic character and flexible as well as durable due to their pulling or tensile strength of more than 2 N/cm. **It** is surprising that all these features can be combined which ensures widespread applications.

**In** the following the invention is detailed described referring to Figures 1 to 9, where
- Figure 1: shows a process of blow spinning the precursor fibres,
- Figure 2: shows another alternative process by electro spinning,
- Figure 3: shows treating the precursor fibres with heat in an oven and the corresponding thermogravimetric analysis,
- Figure 4: shows a sample according to the invention and a corresponding TGA analysis,
- Figure 5: shows the diameter distribution of the fibres,
- Figure 6: shows a representable electron microscope image of a final ceramic non-woven mat according to the invention,
- Figure 7: shows an XRD (X-Ray diffraction diagram) of different samples,
- Figure 8: shows the extension curve of a typical non-woven mat for different applied loads
- Figure 9: shows the pore size distribution of a typical sample according to the invention.

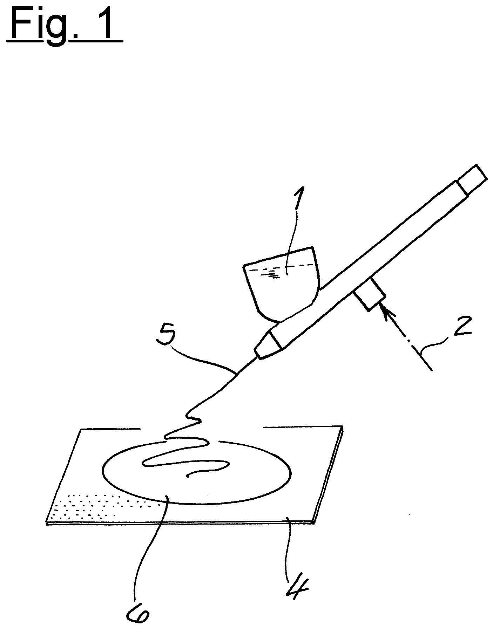

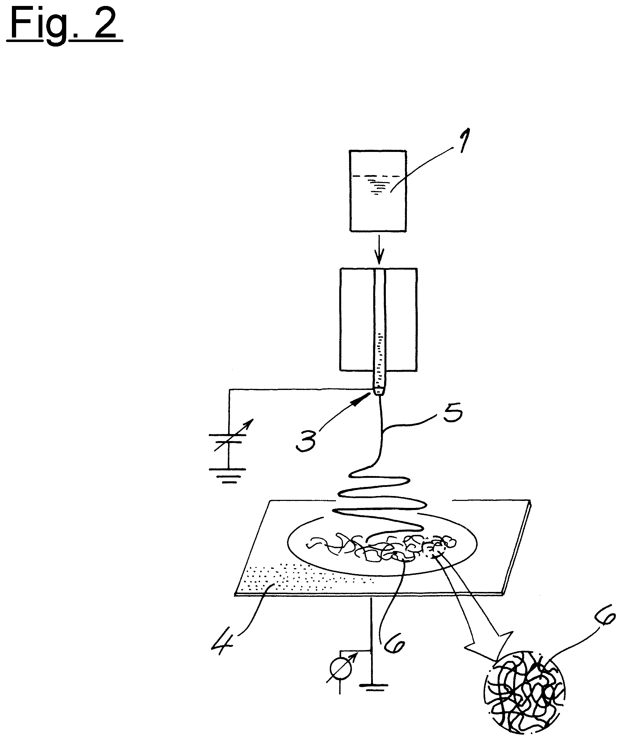

Figures 1 and 2 show a process to make flexible non-woven ceramic mats. The process comprises the step of preparing a ceramic fibre precursor solution 1. The said precursor solution 1 is prepared by mixing a ceramic salt or organometal precursor with a solvent and a polymeric binder. The metal salt can be aluminium acetate. As a possible solvent water can be used. The polymeric binder may be polyethylene oxide (PEO) as has been described before. The same is with the viscosity to be used. The precursor solution 1 is filled in a vessel or container and then treated with compressed air 2 and shown in Figure 1 in order to blow spin the solution resulting in endless precursor fibres or green fibres 5 laid down on a porous substrate 4.

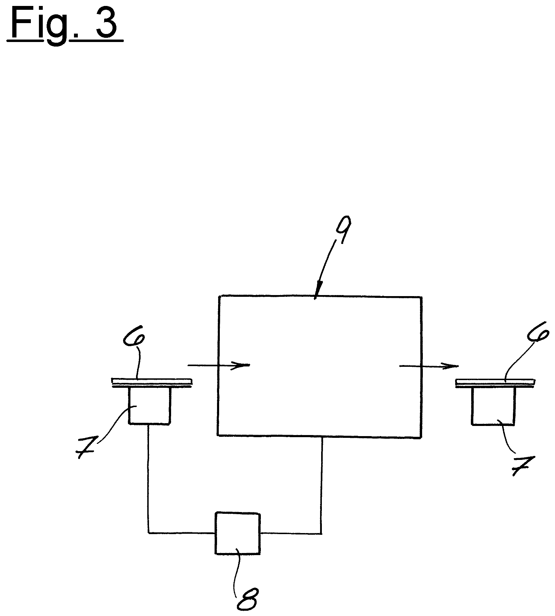

The alternative process in Figure 2 shows the precursor solution 1 forming a polymer solution jet through an electric field between an electrode 3 and the porous substrate 4 which is used as well in Figure 1 (but there without an electric field) for resulting in the endless precursor fibres 5. The endless precursor (green) fibres 5 are again laid down on the porous substrate 4 so as to form a non-woven mat 6 which is shown in detail in Figure 2 and in Figure 3.

After forming the non-woven mat 6 from the green fibres 5 the said mat 6 is heat treated to consolidate the ceramic and to burn out all organic components. These components result from the solvent and the polymeric binder. In order to burn out the said organic components the non-woven mat 6 is placed on a gravimetric scale 7 in order to measure the actual weight of the ceramic mat 6 (compare Figure 3).

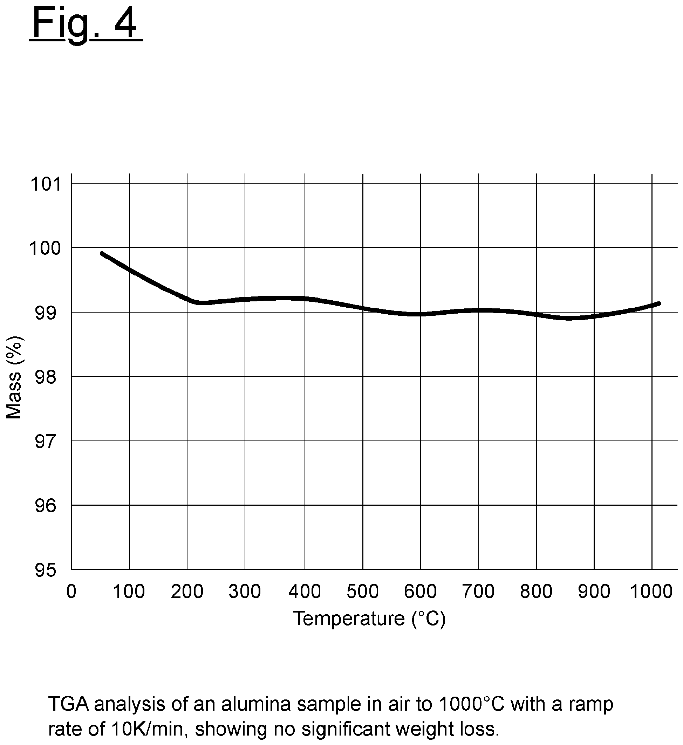

The said scale 7 is connected to a control unit 8 which controls the temperature of an oven 9 and measures the weight. Additionally, the control unit 8 increases the temperature of the oven 9 along a gradient which can be chosen by an applicant, for example an increase of temperature of 10 °C or 10 K per min, i. e. 10 K/min (Figure 4).

The scale 7 together with the ceramic mat 6 enters the oven 9 and is then heat treated. At the beginning the weight of the ceramic mat 6 comprises the ceramic salt, the solvent and the polymeric binder with the different contents according to the precursor solution 1. I. e. the contents of the three components, the ceramic salt, the solvent and the polymeric binder in the precursor solution 1 correspond to the amounts in the precursor fibres 5 forming the non-woven mat 6. From this content the control unit 8 can calculate the content of the solvent as well as the content of the polymeric binder in the non-woven mat 6. Therefore when increasing the temperature of the oven 9 and measuring the weight of the non-woven mat 6 the control unit 8 can calculate the loss of weight due to the heat treatment.

First the solvent will be burnt out because of its low boiling temperature of for example water with a boiling point of 100 °C. Of course the boiling temperature depends on the solvent to be used. Afterwards and parallel the polymer will be burnt out as the melting temperature is approximately 200 °C in case of polyethylene oxide. As soon as the non-woven mat 6 inside the oven 9 shows a residual organic material content of less than 1 % per weight in the said non-woven mat 6 the oven 9 and heat treatment is stopped by the control unit 8.

The resulting non-woven mat 6 leaving the oven 9 is provided with fibres which are entangled between each other by their random deposition. Afterwards the pulling or tensile strength of the said mat 6 can be measured being at least 2 N/cm as described before.

One non-woven ceramic mat 6 as a result of the embodied process and its corresponding thermogravimetric analysis (TGA) to measure the weight loss vs temperature is visualised in Figure 4. The non-woven mat 6 shows the claimed weight loss being less than 1 % for annealing in air up to 1000 °C with a ramp rate of 10 °C/min for a given precursor composition. Indeed aluminium acetate with the solvent water and polyethylene oxide as described has been used. The solid content being 10 % per weight in the precursor solution 1 and the viscosity is kept at approximately 3000 to 5000 pascal seconds. Weight loss of less than 1 % at elevated temperatures indicates that the remaining residual organic content of the non-woven ceramic mat 6 is less than 1 % per weight in the mat. At the beginning of the diagram according to Figure 4, the mass is more than 100 % and decreases rapidly due to the vaporizing of the water solvent. This is not shown in detail.

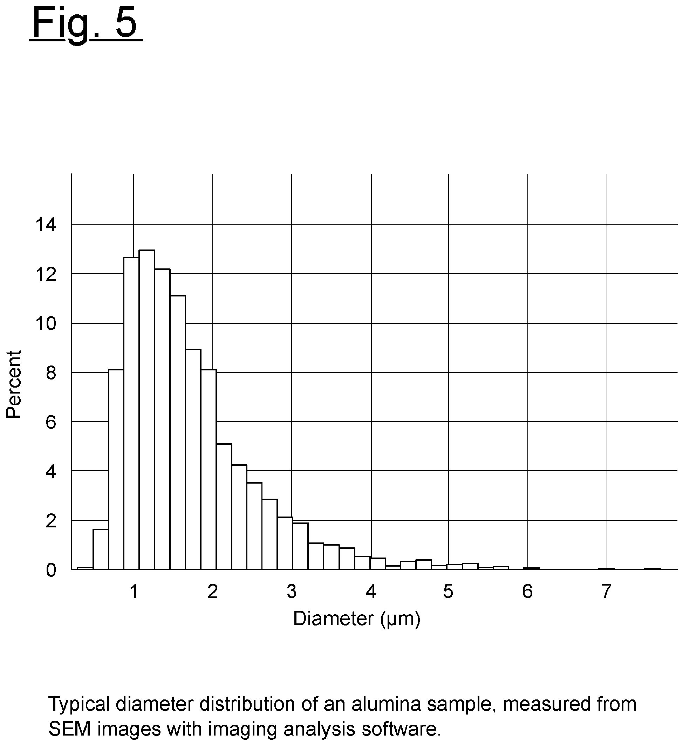

Average fibre diameters of the individual fibres within the non-woven ceramic mat 6 fabricated by the embodied process range between 0.2 µm and 5 µm, especially between 1 µm and 1.5 µm. Measured SEM (scanning electron microscope) data of alumina samples fabricated by the embodied process and the corresponding measured fibre diameters are shown in Figure 5. Mainly uniform fibre diameters generally cause mostly uniform properties of the resultant ceramic mat 6. This uniformity is beneficial in assessing and judging the properties of said mats 6 as well as preventing unwanted 'outliers' or 'spikes' in, for example, mechanical or electrical properties.

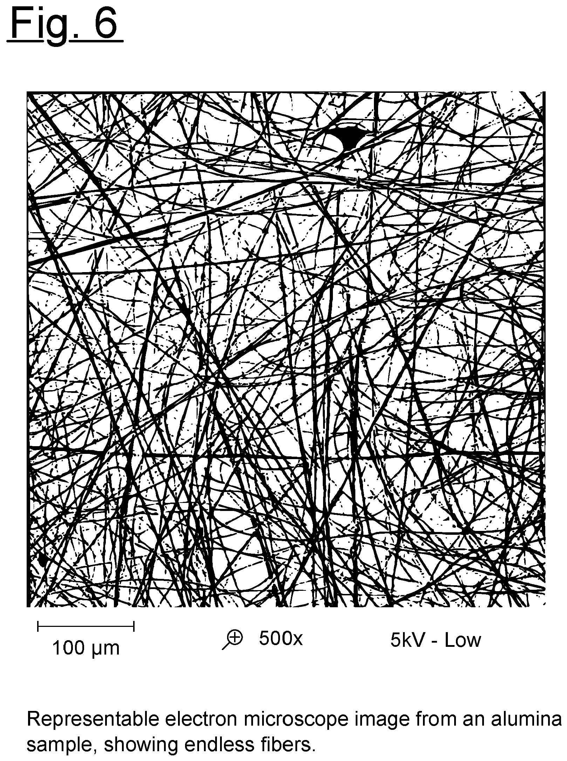

A representative electron microscope image from a ceramic non-woven mat 6 according to the embodied process, showing endless fibres, is shown in Figure 6. The fibres are continuous from several cm to up to 100 m, therefore being endless.

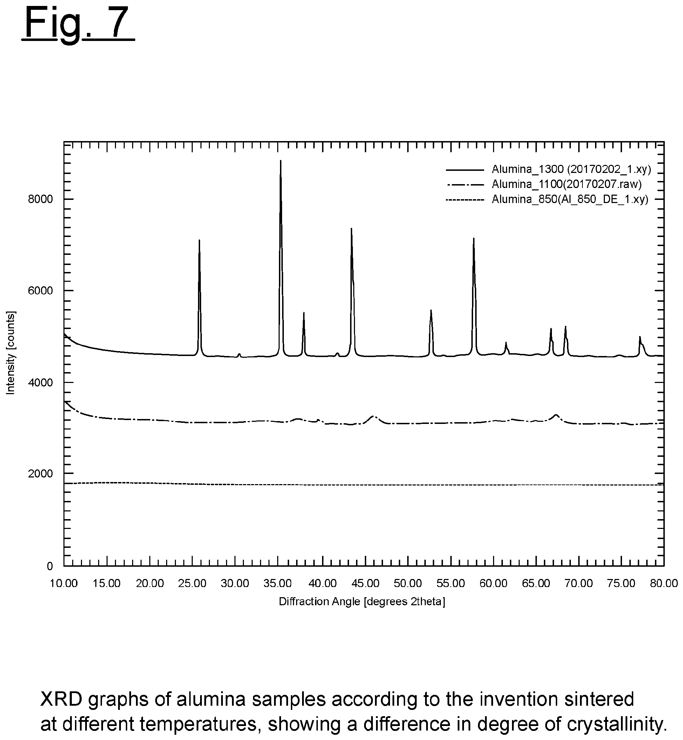

Resultant flexible non-woven ceramic mats 6 of the embodied process are able to express crystalline properties within the individual fibres and therefore the nonwoven fibre-mat upon annealing temperatures above 850 °C ranging from 1 % to as far as 90 % in crystalline content as shown in Figure 7. Properties like mechanical, electrical or thermal properties of the non-woven ceramic mats 6 can therefore be tuned depending on the needs for various applications by the degree of crystallinity of the non-woven ceramic mats 6, ranging from amorphous, 1 % crystallinity, to almost purely crystalline, 90 % crystallinity. Figure 7 shows XRD graphs of alumina samples according to the invention sintered at different temperatures (850 °C, 1100 °C and 1300 °C), showing a difference in degree of crystallinity.

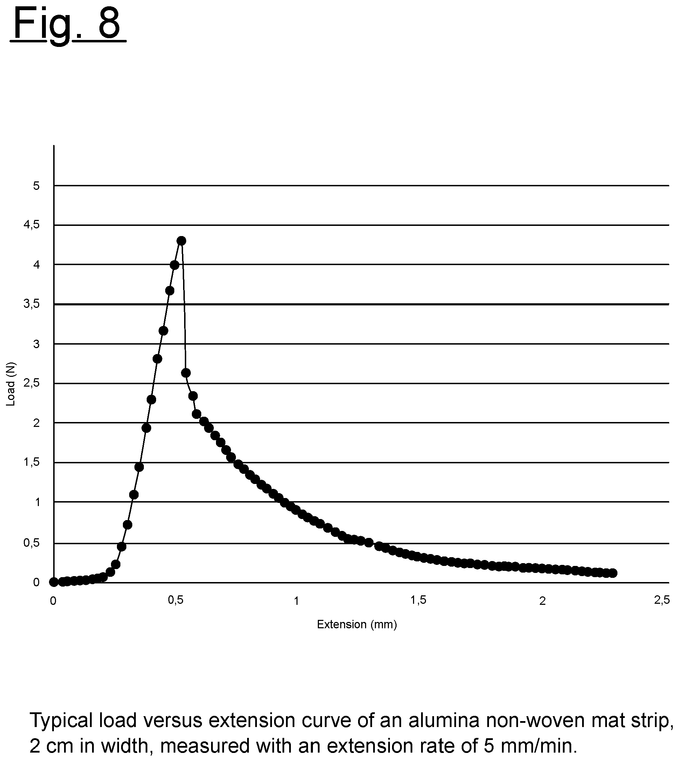

The embodied process includes that the alumina mat according to the invention withstands pulling strengths of at least 2 N/cm in order to enhance durability and mechanical resistance. A representative load vs. extension measurement of such alumina mat is shown in Figure 8. The said mat has been prepared as has been described before, i. e. using aluminium acetate with water and polyethylene oxide precursor solution 1 has been used and was treated with a ramp rate of 10 °C/min up to 1000 °C in the oven 9. The measured sample has a thickness of approximately 10 to 100 µm. The sample/strip has a width of 2 cm and shows for example a pulling strength of more than 4 N/0.5 mm being more than 80 N/cm.

Pore size distribution of a typical sample has been measured with porometry. This method calculates the pore size based on the dewetting of a liquid filled sample (by applying a gas at increasing pressure) with the help of the Kelvin equation, assuming cylindrical pores. An example to measure the said distribution is described in the article "Pore size analysis according to the Kelvin equation" published in May 1973 (Materials and Structures, Springer, Vol. 6, pages 209 to 213).

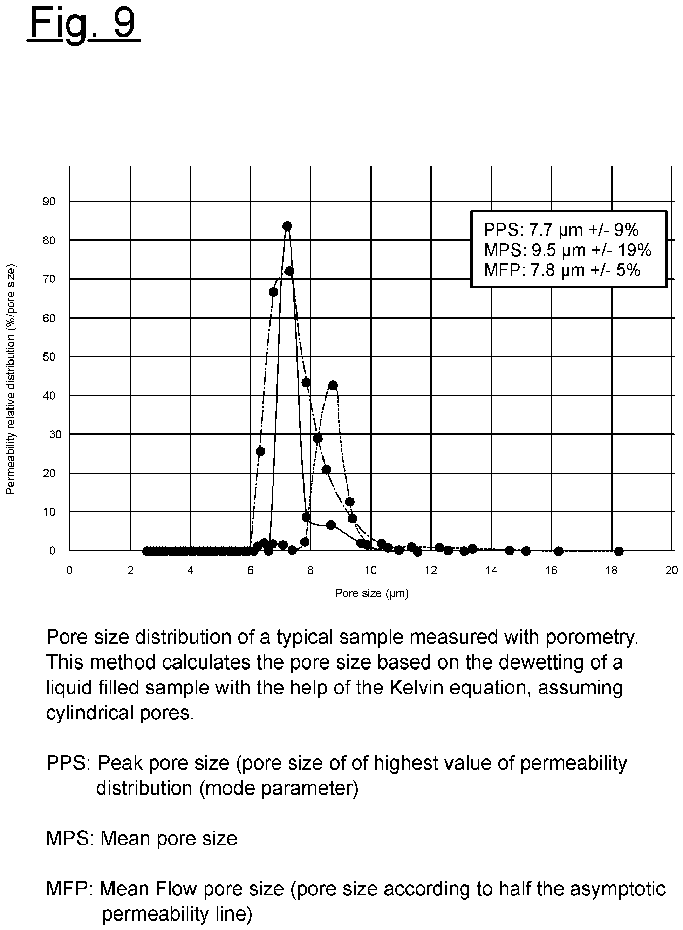

Fibre mats produced by the embodied process typically exhibit pore sizes between 3 µm and 20 µm. A typical pore size distribution of such alumina mat, here especially pore sizes between 6 µm and 10 µm are dominant, measured with porometry is shown in Figure 9. The pore size calculation is based on the dewetting of a liquid filled sample with the help of the Kelvin equation, assuming cylindrical pores. Pore sizes in general play an important role in the case that the alumina mat is intended to be used as for example a physical barrier. Other application fields for such pore sizes are membrane applications, if applicable with active surface species.

## Claims

1. A process to make flexible non-woven ceramic mats (6) comprising the following steps
preparing a ceramic fibre precursor solution (1) using at least a metal salt and/or organometal, a solvent and/or acid and a polymeric binder
spinning the solution resulting in endless precursor fibres (5) laid down on a porous substrate (4) so as to form the non-woven mat (6)
treating the precursor fibres (5) with heat to consolidate the ceramic and to burn out all organic components,
whereby the fibres are entangled between each other by their random deposition and the residual organic material in the final mat being less than 1 % per weight in the mat (6),
whereby the residual organic material in the final mat is measured by thermogravimetric analysis (TGA),
whereby the ceramic fibres have an average diameter between 0.2 µm and 5 µm, and
whereby the heating procedure is terminated as soon as the residual organic material in the fibre mat being less than 1 % per weight.

2. A process according to claim 1 whereby the spinning is conducted by blow spinning, electro spinning or force spinning.

3. A process according to any of the preceding claims, whereby the metal salt and/or organometal in the ceramic fibre precursor solution is derived from a metal oxide, especially aluminium oxide.

4. A process according to any of the preceding claims, whereby the consolidated ceramic fibres show a degree of crystallinity between 1 % and 90 % per weight.

5. A process according to any of the preceding claims, whereby the precursor solution (1) is prepared by mixing the metal salt and/or organometal with the solvent and the polymeric binder

6. A process according to any of the preceding claims, whereby spinning the solution results in the polymeric/metal oxide precursor fibres (green fibres) (5) laid down on the substrate (4).

7. A process according to any of the preceding claims, whereby the fibres in the ceramic mat (6) do not show fused connection points between them.

8. A process according to any of the preceding claims, whereby the ceramic fibres have an average diameter between 1 µm and 1.5 µm.

9. A process according to any of the preceding claims, whereby the distribution of the fibre diameters shows a lognormal character.

10. A process according to any of the preceding claims, whereby the fibre length is endless, i. e. several cm up to 100 m or more.

11. A process according to any of the preceding claims, whereby the planar density of the fibres in the mat is 5 to 60 g/m² or more.

12. A process according to any of the preceding claims, whereby the pulling strength of the final mat is at least 2 N/cm according to ISO 9073-3:2023.

13. A process according to any of the preceding claims, whereby the fibre mat is flexible and foldable.

14. A process according to any of the preceding claims, whereby the fibre mat has an apparent pore size between 3 and 20 µm.

## Patentansprüche

1. Verfahren zur Herstellung flexibler keramischer Vliesmatten (6), umfassend die folgenden Schritte:
Herstellen einer Vorläuferlösung für Keramikfasern (1) unter Verwendung mindestens eines Metallsalzes und/oder eines Organometalls, eines Lösungsmittels und/oder einer Säure sowie eines polymeren Bindemittels,
Spinnen der Lösung, wodurch endlose Vorläuferfasern (5) entstehen, die auf ein poröses Substrat (4) aufgebracht werden, um die Vliesmatte (6) zu bilden;
Behandeln der Vorläuferfasern (5) mit Wärme, um die Keramik zu verfestigen und alle organischen Bestandteile auszubrennen,
wobei sich die Fasern durch ihre zufällige Ablagerung miteinander verflechten und der Gehalt an organischem Restmaterial in der fertigen Matte weniger als 1 Gew.-% in der Matte (6) beträgt,
wobei der Gehalt an organischem Restmaterial in der fertigen Matte mittels thermogravimetrischer Analyse (TGA) gemessen wird,
wobei die Keramikfasern einen mittleren Durchmesser zwischen 0,2 µm und 5 µm aufweisen, und
wobei der Erhitzungsvorgang beendet wird, sobald der Gehalt an organischem Restmaterial in der Fasermatte weniger als 1 Gew.-% beträgt.

2. Verfahren nach Anspruch 1, wobei das Spinnen durch Blasspinnen, Elektrospinnen oder Kraftspinnen erfolgt.

3. Verfahren nach einem der vorhergehenden Ansprüche, wobei das Metallsalz und/oder das Organometall in der Keramikfaser-Vorläuferlösung von einem Metalloxid, insbesondere Aluminiumoxid, abgeleitet ist.

4. Verfahren nach einem der vorhergehenden Ansprüche, wobei die verfestigten Keramikfasern einen Kristallinitätsgrad zwischen 1 Gew.-% und 90 Gew.-% aufweisen.

5. Verfahren nach einem der vorstehenden Ansprüche, wobei die Vorläuferlösung (1) durch Mischen des Metallsalzes und/oder des Organometalls mit dem Lösungsmittel und dem polymeren Bindemittel hergestellt wird.

6. Verfahren nach einem der vorhergehenden Ansprüche, wobei durch das Spinnen der Lösung die Polymer-/Metalloxid-Vorläuferfasern (Grünfasern) (5) auf das Substrat (4) aufgebracht werden.

7. Verfahren nach einem der vorhergehenden Ansprüche, wobei die Fasern in der Keramikmatte (6) keine verschmolzenen Verbindungspunkte untereinander aufweisen.

8. Verfahren nach einem der vorhergehenden Ansprüche, wobei die Keramikfasern einen mittleren Durchmesser zwischen 1 µm und 1,5 µm aufweisen.

9. Verfahren nach einem der vorhergehenden Ansprüche, wobei der Faserdurchmesser eine Lognormalverteilung aufweist.

10. Verfahren nach einem der vorhergehenden Ansprüche, wobei die Faserlänge endlos ist, d. h. mehrere cm bis zu 100 m oder mehr beträgt.

11. Verfahren nach einem der vorhergehenden Ansprüche, wobei die flächenbezogene Dichte der Fasern in der Matte 5 bis 60 g/m² oder mehr beträgt.

12. Verfahren nach einem der vorhergehenden Ansprüche, wobei die Zugfestigkeit der fertigen Matte gemäß ISO 9073-3:2023 mindestens 2 N/cm beträgt.

13. Verfahren nach einem der vorhergehenden Ansprüche, wobei die Fasermatte flexibel und faltbar ist.

14. Verfahren nach einem der vorhergehenden Ansprüche, wobei die Fasermatte eine scheinbare Porengröße zwischen 3 und 20 µm aufweist.

## Revendications

1. Procédé de fabrication de nattes céramiques non tissées souples (6) comprenant les étapes suivantes :
la préparation d'une solution de précurseur de fibres céramiques (1) à partir d'au moins un sel métallique et/ou un organométallique, d'un solvant et/ou d'un acide et d'un liant polymère ;
le filage de la solution pour obtenir des fibres de précurseur continues (5) déposées sur un substrat poreux (4) de manière à former le matelas non tissé (6) ;
le traitement thermique des fibres précurseurs (5) pour consolider la céramique et éliminer par combustion tous les composants organiques,
de sorte que les fibres s'entremêlent les unes aux autres grâce à leur dépôt aléatoire et que la teneur en matière organique résiduelle dans le matelas final soit inférieure à 1 % en poids du matelas (6),
auquel cas la teneur en matière organique résiduelle dans la nappe finale est mesurée par analyse thermogravimétrique (ATG),
auquel cas les fibres céramiques ont un diamètre moyen compris entre 0,2 µm et 5 µm, et
auquel cas le processus de chauffage est interrompu dès que la teneur en matière organique résiduelle dans la nappe de fibres est inférieure à 1 % en poids.

2. Procédé selon la revendication 1, dans lequel le filage est réalisé par filage au jet, électrofilage ou filage par force.

3. Procédé selon l'une quelconque des revendications précédentes, dans lequel le sel métallique et/ou le composé organométallique présent dans la solution de précurseur de fibres céramiques est dérivé d'un oxyde métallique, en particulier de l'oxyde d'aluminium.

4. Procédé selon l'une quelconque des revendications précédentes, dans lequel les fibres céramiques consolidées présentent un degré de cristallinité compris entre 1 % et 90 % en poids.

5. Procédé selon l'une quelconque des revendications précédentes, dans lequel la solution de précurseur (1) est préparée en mélangeant le sel métallique et/ou le composé organométallique avec le solvant et le liant polymère.

6. Procédé selon l'une quelconque des revendications précédentes, dans lequel le filage de la solution conduit au dépôt des fibres de précurseur à base de polymère/oxyde métallique (fibres vertes) (5) sur le substrat (4).

7. Procédé selon l'une quelconque des revendications précédentes, dans lequel les fibres de la natte céramique (6) ne présentent pas de points de jonction fusionnés entre elles.

8. Procédé selon l'une quelconque des revendications précédentes, dans lequel les fibres céramiques ont un diamètre moyen compris entre 1 µm et 1,5 µm.

9. Procédé selon l'une quelconque des revendications précédentes, dans lequel la distribution des diamètres des fibres présente un caractère logarithmique normal.

10. Procédé selon l'une quelconque des revendications précédentes, dans lequel la longueur des fibres est illimitée, c'est-à-dire comprise entre plusieurs centimètres et 100 m ou plus.

11. Procédé selon l'une quelconque des revendications précédentes, dans lequel la densité plane des fibres dans la nappe est comprise entre 5 et 60 g/m² ou plus.

12. Procédé selon l'une quelconque des revendications précédentes, dans lequel la résistance à la traction de la nappe finale est d'au moins 2 N/cm conformément à la norme ISO 9073-3:2023.

13. Procédé selon l'une quelconque des revendications précédentes, dans lequel la natte de fibres est souple et pliable.

14. Procédé selon l'une quelconque des revendications précédentes, dans lequel la natte de fibres présente une taille de pores apparente comprise entre 3 et 20 µm.
